# FASCICULE DE BREVET EUROPEEN

(11) **EP 1 018 919 B1**
(45) Date de publication et mention de la délivrance du brevet: **02.01.2003**
(21) Numéro de dépôt: 98945374.1
(22) Date de dépôt: 25.09.1998
(51) Int. Cl.: A47J 43/07

(54) **ACCESSOIRE DE PREPARATION POUR EMULSIONS, MOUSSES ET DISPERSIONS ET APPAREIL ELECTROMENAGER, OU MENAGER, DE PREPARATION CULINAIRE**
ZUSATZGERÄT FÜR DIE HERSTELLUNG VON EMULSIONEN, SCHÄUMEN UND DISPERSIONEN UND KÜCHENMASCHINE DAFÜR
ACCESSORIES FOR PREPARING EMULSIONS, FOAMS AND DISPERSIONS AND ELECTRICAL HOUSEHOLD, OR DOMESTIC, APPLIANCE FOR COOKING

(30) Priorité: 25.09.1997 FR 9712173
(43) Date de publication de la demande: 19.07.2000
(73) Titulaire: SEB S.A., 69130 Ecully (FR)
(72) Inventeur: ASTEGNO, Jean-Paul, F-64420 Espoey (FR); TOMPA, Carole, F-65000 Tarbes (FR); GARRIGUES, Patrick, F-65260 Pierrefitte-Nestalas (FR)
(74) Mandataire: Kiehl, Hubert
(86) Numéro de dépôt international: FR9802057
(87) Numéro de publication internationale: WO99015060

(56) Documents cités:
- DE-A- 4 215 400
- FR-A- 1 270 820
- FR-A- 1 596 721
- FR-A- 2 225 128
- GB-A- 771 156
- US-A- 1 417 982
- US-A- 1 783 437

## Description

### DOMAINE TECHNIQUE

La présente invention se rapporte au domaine technique général des accessoires de préparation culinaire montés sur un appareil électroménager de préparation culinaire du genre robot ménager ou batteur, ou sur un appareil ménager de préparation culinaire, ainsi qu'aux appareils électroménagers ou ménagers de préparation culinaire comportant de tels accessoires.

Par robot ménager, il convient d'entendre un appareil électroménager de préparation culinaire comportant un récipient de travail et dans lequel opère l'outil de travail entraîné par la motorisation de l'appareil. Un tel appareil est généralement prévu pour fonctionner avec différents types d'outils tels que par exemple des outils pour râper, émincer, hacher, pétrir, mélanger, émulsionner, fouetter.

Par batteur, il convient d'entendre un appareil électroménager de préparation culinaire comportant au moins un outil de travail pour mélanger, émulsionner, fouetter, ledit appareil ne comportant pas de récipient de travail associé, et étant prévu au contraire pour être tenu par l'utilisateur à la main afin d'être utilisé dans tout récipient approprié.

Par appareil ménager de préparation culinaire, il convient d'entendre un appareil ménager mécanique transformant au moins en partie le mouvement fourni par l'utilisateur pour le communiquer à l'outil de travail en contact avec la préparation.

Par accessoire de préparation pour mélanges, émulsions, mousses et dispersions, il convient d'entendre un outil de travail prévu pour être monté sur un appareil électroménager ou ménager de préparation culinaire, et qui permette de réaliser les préparations précitées.

Une émulsion est une dispersion de gouttelettes de matière grasse dans de l'eau ou une solution aqueuse, ou inversement une dispersion de gouttelettes de solution aqueuse dans une matière grasse. La mayonnaise, la sauce béarnaise, la crème sont des émulsions du type "huile dans eau". Le beurre est une émulsion du type "eau dans huile".

Une mousse est une dispersion de bulles d'un gaz dans un liquide, ou dans un solide. Le blanc d'oeuf battu en neige est par exemple une mousse.

Les préparations culinaires telles que les émulsions ou les mousses font intervenir des réactions physico-chimiques activées par une préparation mécanique. La texture de la préparation dépend de l'agitation apportée au mélange initial d'ingrédients. En particulier, une texture assez fine, présentant une meilleure stabilité qu'une texture plus grossière, peut être recherchée. Une telle texture est en effet plus stable car elle offre plus de surface entre les inclusions, que sont l'air pour les mousses et l'huile pour les émulsions, et la matrice, laquelle est constituée le plus souvent d'une solution aqueuse. La présence de molécules tensioactives, telles que des protéines ou des lécithines, à l'interface entre l'eau d'une part, et l'huile ou l'air d'autre part, contribue à stabiliser les inclusions.

Pour préparer les émulsions ou les mousses des ustensiles culinaires tels que les fouets sont utilisés.

### TECHNIQUE ANTERIEURE

Dans sa version traditionnelle, le fouet est un ustensile manuel comportant un manche à l'une des extrémités duquel sont fixés et repartis angulairement des fils métalliques recourbés de manière à former une cage et dont chacune des extrémités est fixée sur le manche. Un tel fouet est par exemple décrit dans le document US 884 085.

Ce type de fouet peut être monté sur un appareil ménager de préparation culinaire, tel que décrit dans le document US 1 007 891.

Le document FR 1 596 721 décrit un fouet manuel comportant une pluralité de branches sensiblement planes en matière plastique. Chaque branche est constituée soit d'une portion de plaque percée de lumières, soit d'éléments sensiblement filiformes, attenants, formant un treillis. Le treillis comprend des parties sensiblement filiformes disposées longitudinalement, selon la direction de l'axe du fouet, et d'autres parties réunissant transversalement les parties précédentes, de manière à accroître la rigidité des branches du fouet. Les différentes branches de ce fouet peuvent être moulées simultanément, de manière à former un ensemble monobloc, ou moulées sous forme d'éléments distincts munis de moyens d'assemblage.

L'usage d'appareils manuels requiert une certaine dextérité quant au mode opératoire ou à la vitesse d'exécution. De plus la durée d'utilisation pour obtenir le résultat recherché peut paraître longue à l'utilisateur. Par conséquent le résultat obtenu avec de tels appareils n'est pas assuré.

De plus le contact du fouet avec le récipient de travail est une source de bruit, en particulier lorsque le fouet est métallique et que le récipient de travail est réalisé dans un matériau très rigide et non amortissant tel que le verre, le métal ou la céramique. En comparaison avec les fouets métalliques, les fouets à branches planes en matière plastique présentent une déformabilité moindre, ce qui rend le travail plus pénible lorsque le fouet heurte la paroi du récipient de travail. Pour toutes ces raisons l'utilisation de tels appareils manuels est à la longue fastidieuse.

Les robots ménagers ou les batteurs peuvent procurer un résultat plus constant avec un effort moindre.

Le document DE 42 15 400 décrit un robot sur lequel est monté un outil à gâteaux animé d'un mouvement planétaire.

Le document FR 1 270 820 décrit un organe de brassage pour batteur, réalisé entièrement en matière plastique. Cet organe de brassage se compose d'une partie cylindrique munie d'un organe d'entraînement prolongée par un corps formant fouet auquel succèdent des bras formant une cage. Le matériau utilisé est par exemple un polyamide, ce qui permet une certaine souplesse du corps. Il est ainsi possible de déformer élastiquement en flexion le corps de ces fouets d'un angle pouvant atteindre 30°.

Un tel outil monté sur un batteur peut être utilisé contre la paroi du récipient de travail grâce à ses propriétés de déformation. Celles ci sont toutefois limitées et obligent l'utilisateur à appliquer constamment un effort afin de bien racler les parois, ce malgré l'utilisation d'un appareil électrique. De plus l'application de cet effort sur l'outil pour chacune des portions de la paroi du récipient de travail n'est pas forcément aisée.

Le montage d'un tel outil sur un robot suppose pour un fonctionnement correct et durable que l'outil n'entre pas en contact avec les parois du récipient. Il est de ce fait difficile de travailler correctement la matière présente contre les parois.

Le document FR 2 058 049 décrit un outil pour batteur électrique, permettant de réaliser à la fois le pétrissage de pâtes ainsi que l'agitation et le battage de produits plus fluides tels que les blancs d'oeuf ou la crème. L'outil comporte plusieurs branches de fil métallique courbées en spirale et réunies sous la forme d'un panier. L'agitation et le battage sont notamment assurées grâce à la réunion des branches sous forme de panier.

Un outil rigide tel qu'un outil métallique ne peut être valablement utilisé en contact avec le récipient de travail, sous peine de nuisances sonores ou de dégradation de la paroi du récipient. Il est difficile de travailler correctement la matière présente contre les parois avec un tel outil. Pour travailler le plus de matière possible, l'utilisateur doit contrôler précisément le mouvement qu'il donne à son appareil afin que l'outil passe au plus près des parois sans les heurter. Le confort d'utilisation d'un tel appareil est restreint si l'utilisateur veut obtenir de bons résultats de préparation.

Tous ces outils sont en outre peu commodes à nettoyer. Une partie de la matière des préparations subsiste sur la surface des outils après le retrait de ceux-ci du récipient de travail. Ces outils comportent de nombreuses surfaces difficiles d'accès, tel que l'intérieur des fouets métalliques ou encore les zones concaves ou à faible rayon de courbure des fouets en matière plastique.

Le document GB 771 156 décrit un accessoire de préparation culinaire pour appareil de préparation culinaire, destiné à être utilisé dans un récipient de travail, comportant un outil de travail constitué de plusieurs fils flexibles formant des boucles définissant une cage susceptible de se déformer contre une paroi du récipient de travail pour épouser sensiblement la forme de ladite paroi. En fonctionnement, cette construction permet donc d'utiliser l'accessoire contre la paroi du récipient de travail. De plus un tel accessoire est facile à nettoyer grâce à la souplesse des fils. Toutefois, un tel accessoire de préparation culinaire trouve ses limites lorsque la préparation est un peu visqueuse.

### EXPOSE DE L'INVENTION

L'objet de l'invention vise à proposer un accessoire de préparation culinaire qui permette une grande qualité de préparation grâce à l'obtention d'une texture fine et/ou bien homogène pour la matière formant la préparation, favorisant ainsi la stabilité de ladite préparation.

Un autre objet de l'invention vise à proposer un accessoire de préparation culinaire pour lequel le contact de l'outil de travail avec un récipient de travail produise une signature de bruit compatible avec la perception d'une utilisation normale dudit accessoire.

Un autre objet de l'invention vise à proposer un accessoire de préparation culinaire qui permette d'améliorer le mélange de la préparation.

Un autre objet de l'invention vise à proposer un appareil électroménager de préparation culinaire comportant un outil de travail pour mélanges, émulsions, mousses et dispersions.

Un autre objet de l'invention vise à proposer un appareil ménager de préparation culinaire comportant un outil de travail pour mélanges, émulsions, mousses et dispersions.

Les buts assignés à l'invention sont atteints avec un accessoire de préparation culinaire pour appareil ménager ou électroménager de préparation culinaire, destiné à être utilisé dans un récipient de travail, comportant un organe de manoeuvre et un outil de travail monté sur l'organe de manoeuvre, caractérisé en ce que l'outil de travail est constitué d'au moins un fil flexible définissant une cage susceptible de se déformer contre une paroi du récipient de travail pour épouser sensiblement la forme de ladite paroi, le ou les fil(s) flexible(s) formant des boucles réunies par un organe de maintien.

De préférence l'organe de maintien est disposé à l'opposé de l'organe de manoeuvre.

Le contact du ou des fil(s) de l'outil de travail avec la paroi favorise la création de tourbillons dans la préparation autour du ou des fil(s), ce qui est intéressant lors de la réalisation d'émulsions, de mélanges ou de dispersions, ou favorise l'entrée d'air dans la préparation, ce qui est intéressant lors de la réalisation de mousses, et permet dans les deux cas d'obtenir des textures fines. Le contact du ou des fil(s) de l'outil de travail avec la paroi rend possible le travail de toute la matière présente dans le récipient et favorise ainsi l'obtention d'une préparation bien homogène. Il est ainsi possible d'obtenir une grande qualité de préparation grâce à l'interaction du ou des fil(s) de l'outil de travail avec les parois.

Surtout, cette disposition permet de solidariser les boucles formées par le ou les fil(s) et permet une meilleure efficacité dans les mélanges présentant une certaine viscosité tels que les pâtes souples notamment.

Avantageusement le(s) fil(s) flexible(s) est (sont) monté(s) de manière croisée entre l'organe de manoeuvre et l'organe de maintien.

Cette disposition assure une meilleure rigidité de l'outil de travail favorable pour la réalisation de certaines préparations, tout en conservant la souplesse nécessaire pour une déformation dudit outil de travail contre la paroi du récipient de travail.

Le ou les fil(s) flexible(s) équipant l'accessoire de préparation culinaire selon l'invention est (sont) réalisé(s) de préférence en matériau polymère.

Les buts assignés à l'invention sont atteints également avec un appareil électroménager de préparation culinaire du genre robot ménager ou batteur, comportant un moteur disposé dans un bâti et entraînant, par l'intermédiaire d'un organe de transmission, l'organe de manoeuvre d'un accessoire de préparation culinaire selon l'invention.

L'utilisateur peut ainsi bénéficier de toute l'énergie nécessaire pour utiliser au mieux l'accessoire de préparation culinaire selon l'invention.

Les buts assignés à l'invention sont atteints également avec un appareil ménager de préparation culinaire comportant un moyen d'entraînement relié à des moyens de transmission entraînant l'organe de manoeuvre d'un accessoire de préparation culinaire selon l'invention.

L'utilisateur peut ainsi bénéficier des avantages apportés par l'accessoire de préparation culinaire selon l'invention dans un appareil peu onéreux.

### DESCRIPTION SOMMAIRE DES DESSINS

D'autres particularités et avantages ressortiront mieux à la lecture de la description donnée ci-après en référence aux dessins annexés donnés à titre d'exemples illustratifs mais non limitatifs dans lesquels :
- la figure 1 montre une vue de coté en coupe d'un exemple de réalisation d'un accessoire de préparation culinaire de l'art antérieur.
- la figure 2 montre une vue de dessous de l'exemple de réalisation montré à la figure 1.
- la figure 3 montre une vue de coté d'un exemple de réalisation d'un accessoire de préparation culinaire selon l'invention.
- la figure 4 montre une vue de dessous de l'exemple de réalisation montré à la figure 3.
- la figure 5 montre une vue de coté d'un deuxième exemple de réalisation d'un accessoire de préparation culinaire selon l'invention.
- la figure 6 montre une vue de dessous de l'exemple de réalisation montré à la figure 5.
- la figure 10 montre selon une vue partielle en coupe longitudinale un accessoire de préparation culinaire selon l'invention au contact d'un récipient de travail.
- la figure 11 montre un schéma d'un batteur comportant un accessoire de préparation culinaire selon l'invention.
- la figure 12 montre un schéma d'un robot ménager comportant un accessoire de préparation culinaire selon l'invention.
- la figure 13 montre un schéma d'un appareil ménager comportant un accessoire de préparation culinaire selon l'invention.

### MEILLEURE MANIERE DE REALISER L'INVENTION

L'accessoire de préparation culinaire 1 selon l'invention est prévu pour être monté sur un appareil ménager ou électroménager de préparation culinaire, et est destiné à être utilisé dans un récipient de travail.

L'accessoire 1 comporte un organe de manoeuvre 2 sur lequel est monté un outil de travail 8 constitué d'au moins un fil flexible 3 définissant une cage 19 susceptible de se déformer contre une paroi 20 d'un récipient de travail pour épouser sensiblement la forme de ladite paroi. Tel que montré à la figure 10 le fil 3 est déformé par la paroi 20. Chaque fil 3 amené au contact de la paroi 20 est ainsi susceptible de se déformer élastiquement. La cage 19 formée par le fil ou les fils 3 est souple et déformable.

De préférence l'accessoire de préparation culinaire 1 comporte une pluralité de fils flexibles 3.

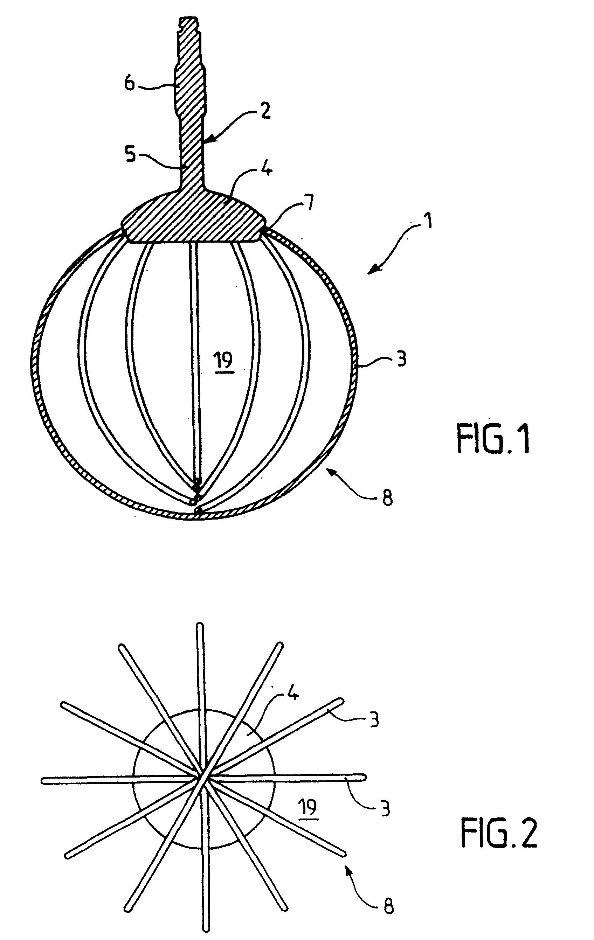

Tel que montré aux figures 1 à 6, l'une au moins des deux extrémités 7 des fils flexibles 3 est avantageusement montée sur l'organe de manoeuvre 2.

Selon l'exemple de réalisation montré aux figures 1 et 2 les deux extrémités 7 des fils 3 sont montées sur l'organe de manoeuvre 2. Cette construction correspond à l'art antérieur connu du document GB 771 156. Chaque fil 3 forme ainsi une boucle. Les fils 3 peuvent être sensiblement de même longueur, tel que représenté à la figure 1, voire de longueur identique, ou de longueur différente.

La cage 19 définie par les fils 3 est de forme sensiblement sphérique, ou de toute autre forme appropriée, par exemple en forme de poire. L'agencement des fils 3 définissant la cage 19 est de géométrie méridienne, tel que représenté aux figures 1 à 4, ou de toute autre géométrie appropriée.

Tel que représenté à la figure 1 les extrémités 7 des fils flexibles 3 sont montées sur la périphérie d'une couronne 4 prolongeant un axe 5 de l'organe de manoeuvre 2. L'axe 5 comporte avantageusement des méplats 6 prévus pour le montage dudit accessoire sur un appareil électroménager ou ménager de préparation culinaire.

L'accessoire de préparation culinaire 1 montré aux figures 1 et 2 comporte six fils flexibles 3 montés à leurs deux extrémités 7 sur l'organe de manoeuvre 2 et répartis régulièrement autour de l'axe dudit organe de manoeuvre.

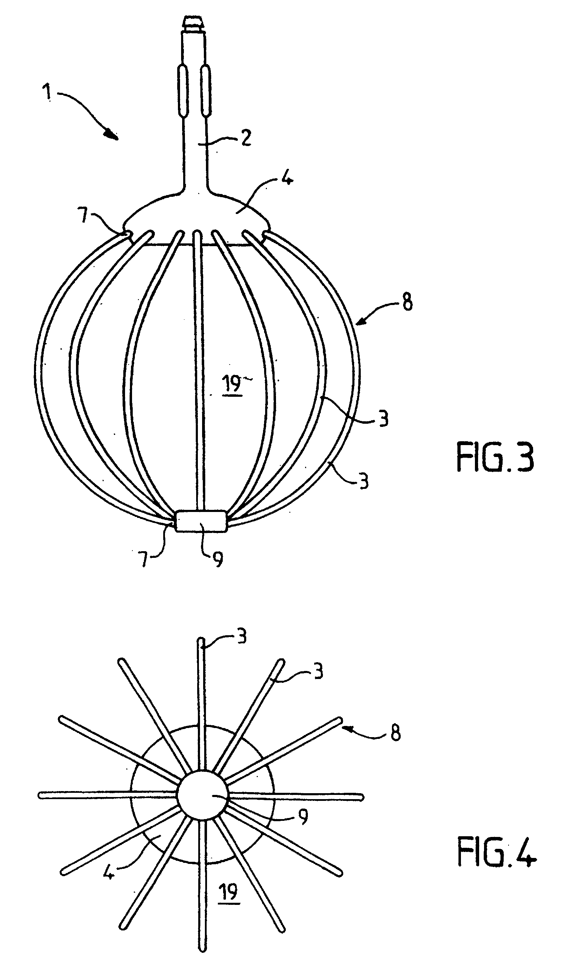

Selon l'invention, les fils flexibles 3 forment des boucles réunies par un organe de maintien 9 disposé de préférence à l'opposé de l'organe de manoeuvre 2. Selon l'exemple de réalisation montré aux figures 3 et 4 une extrémité 7 des fils flexibles 3 est montée sur l'organe de manoeuvre 2 alors que l'autre extrémité 7 est montée sur un organe de maintien 9, disposé de préférence à l'opposé de l'organe de manoeuvre 2. Les fils flexibles 3 étant déformables élastiquement, l'organe de maintien 9 est ainsi mobile par rapport à l'organe de manoeuvre 2. L'accessoire de préparation culinaire 1 montré aux figures 3 et 4 comporte douze fils flexibles 3 répartis angulairement autour l'organe de manoeuvre 2. D'autres variantes non montrées aux figures sont envisageables pour réaliser l'organe de maintien 9, par exemple utiliser des fils de maintien ou encore coller ou souder les boucles formées par les fils 3 montés sur l'organe de manoeuvre 2.

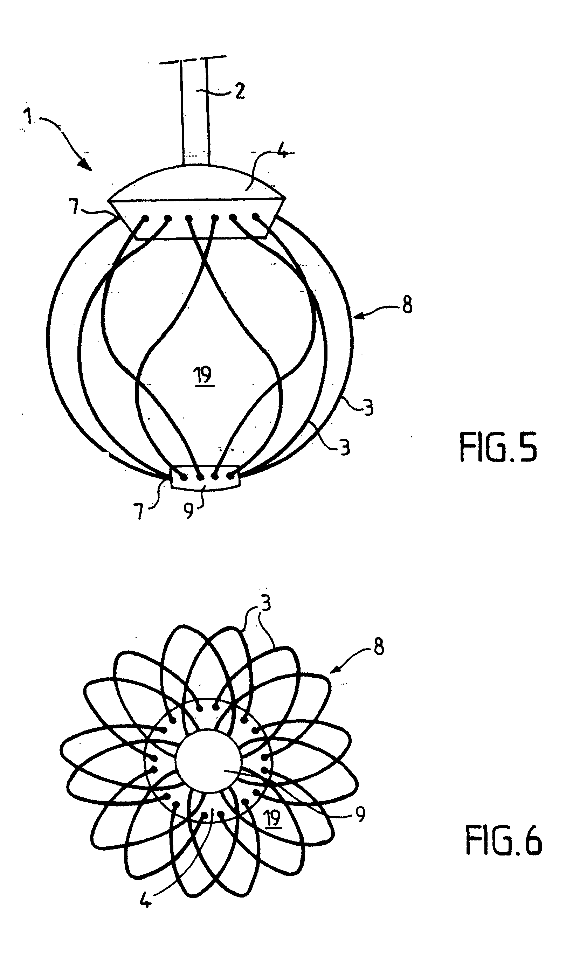

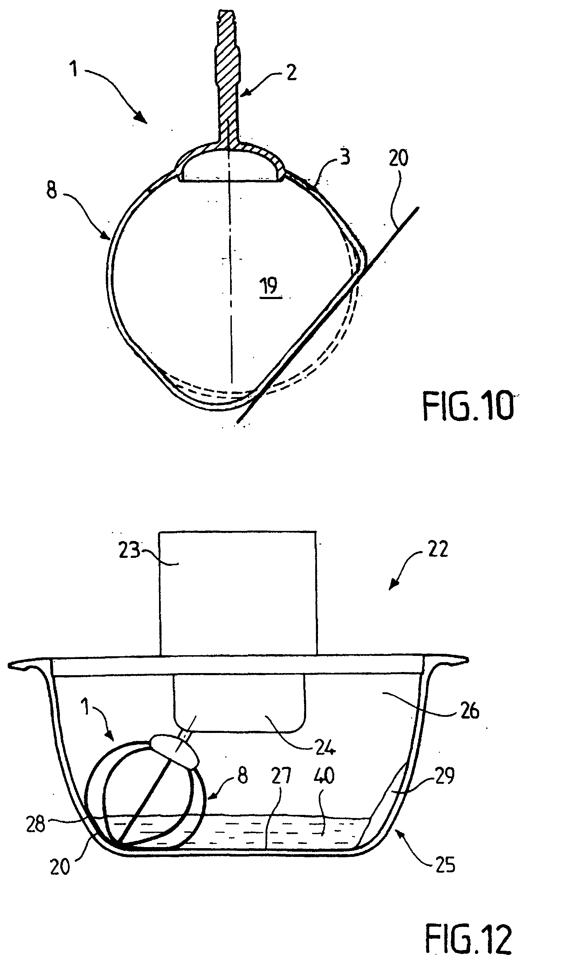

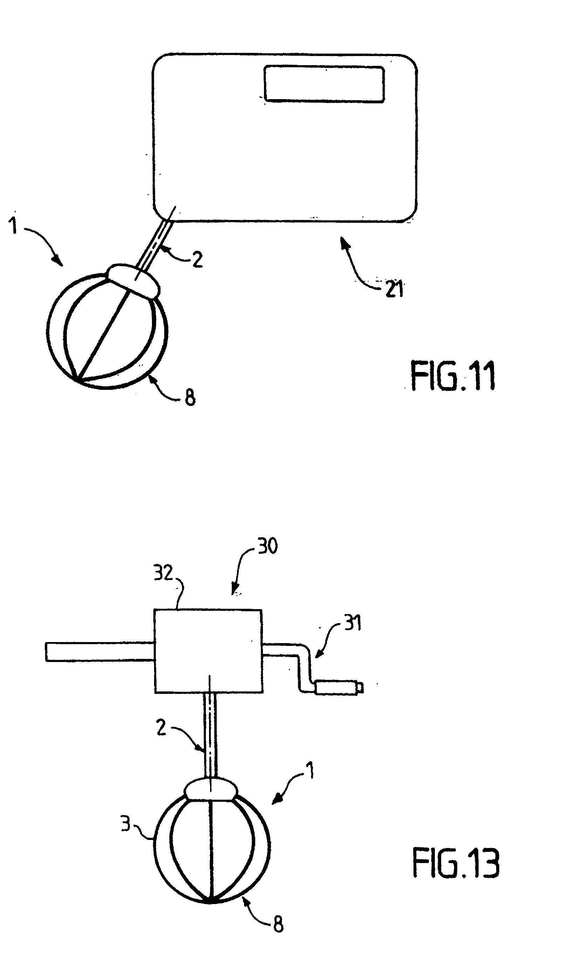

Selon une variante de réalisation préférentielle montrée aux figures 5 et 6, les fils flexibles 3 sont montés de manière croisée entre l'organe de manoeuvre 2 et l'organe de maintien 9. Chaque fil 3 croise au moins l'un des autres fils 3 montés entre l'organe de manoeuvre 2 et l'organe de maintien 9. Cette disposition peut aussi être utilisée lorsque les fils sont montés à leurs deux extrémités sur l'organe de manoeuvre 2.

La répartition angulaire des fils 3 autour de l'organe de manoeuvre 2 est avantageusement périodique, tel que représenté aux figures.

Les fils flexibles 3 peuvent être réalisés en tout matériau compatible avec une utilisation alimentaire, présentant des caractéristiques de souplesse et de rigidité appropriées, de manière à assurer un travail efficace de la préparation tout en autorisant la déformation de la cage 19 de l'accessoire de préparation culinaire 1 selon l'invention sans déformation plastique irréversible desdits fils. Les matériaux polymères, tels que par exemple des polyamides, des polypropylènes ou des élastomères, conviennent particulièrement pour la réalisation des fils flexibles 3. L'utilisation de fils 3 armés renforcés au moins sur une partie de leur longueur par une âme métallique dans le but d'obtenir une plus grande raideur peut être envisagée.

Les fils flexibles 3 présentent de préférence une section circulaire, favorable aux déformations en flexion ou en torsion. D'autres géométries sont bien sûr envisageables, telles que des sections elliptiques, cannelées, polygonales, voire variables, ou encore des fils constitués de plusieurs brins tressés ou non, et éventuellement recouverts d'une couche protectrice.

Selon une version avantageuse de l'invention, des traitements de surface permettent d'adapter la mouillabilité des fils pour faciliter leur nettoyage ou encore pour favoriser les réactions physico-chimiques intervenant lors des préparations culinaires.

Selon une version préférentielle de l'invention, l'organe de manoeuvre 2 et l'un au moins des fils flexibles 3 sont issus d'une même pièce, obtenue par exemple par moulage.

Selon une variante de réalisation, non montrée aux figures, au moins l'un des fils flexibles 3 et l'organe de maintien 9 sont constitués d'une seule pièce, réalisée par exemple par moulage.

Tel que représenté à la figure 10, le fil flexible 3 monté sur l'organe de manoeuvre 2 amené au contact d'une paroi 20, issue par exemple d'un récipient de travail, se déforme élastiquement au contact de ladite paroi. Il est ainsi possible d'utiliser l'accessoire de préparation culinaire 1 selon l'invention contre la paroi 20 sans risque de détérioration de ladite paroi ou dudit accessoire.

Avantageusement l'outil de travail 8 comporte plusieurs familles de fils 3 de sections différentes. De manière encore plus avantageuse l'outil de travail 8 comporte plusieurs familles de fils 3 de raideurs différentes. L'accessoire de préparation culinaire selon l'invention peut comporter par exemple une première famille de fils 3 prévus pour racler la paroi 20 du récipient de travail et une deuxième famille de fils 3 prévus pour mélanger l'intérieur de la préparation.

A titre de variante, un seul fil flexible 3 monté sur l'organe de manoeuvre 2 peut former l'outil de travail 8. Le fil 3 est alors monté en plusieurs points sur l'organe de manoeuvre 2. Le fil 3 peut former plusieurs boucles réunies par un organe de maintien 9. De façon encore plus avantageuse le fil 3 est monté de manière croisée entre l'organe de manoeuvre 2 et l'organe de maintien 9.

L'accessoire de préparation culinaire 1 selon l'invention peut être avantageusement monté sur un appareil électroménager de préparation culinaire.

La figure 11 représente de manière schématique un batteur 21 comportant un moteur électrique associé à une transmission, non représentés aux figures, sur lequel est monté de manière connue et avantageusement de façon amovible l'organe de manoeuvre 2 de l'accessoire de préparation culinaire 1. Le batteur 21 est utilisé avec tout récipient de travail approprié pour la réalisation de la préparation souhaitée et communique avantageusement un mouvement de rotation à l'accessoire de préparation culinaire 1.

La figure 12 représente de manière schématique un robot ménager 22 comportant un moteur électrique disposé dans un bâti 23, associé à un organe de transmission 24 sur lequel est monté avantageusement de façon amovible l'organe de manoeuvre 2 de l'accessoire de préparation culinaire 1.

Le robot ménager 22 comporte également un récipient de travail 25 prévu pour contenir des matières alimentaires 40. Le récipient 25 est de toute forme appropriée, par exemple sensiblement cylindrique et de forme évasée, tel qu'illustré à la figure 12. Le récipient 25 est délimité par une paroi 20 comprenant une paroi de fond 27 et une paroi latérale 28, et comporte une ouverture 26 opposée à la paroi de fond 27. Le récipient de travail peut comporter une ou plusieurs nervures 29 s'étendant sur la paroi latérale 28. D'autres formes sont envisageables pour le récipient 25. Notamment la paroi latérale ou la paroi de fond peuvent s'écarter d'une géométrie de révolution.

Il est à noter qu'un récipient de travail comportant une ou plusieurs nervures, et/ou dont les parois ne présentent pas une géométrie de révolution est peu compatible avec un outil de travail rigide.

Le récipient de travail 25 est réalisé en tout matériau compatible avec une utilisation alimentaire et avantageusement en verre, céramique, vitrocéramique, en matériau métallique ou plastique. Les dispersions géométriques observées notamment avec les récipients en verre ne sont pas gênantes pour l'utilisation de l'accessoire 1 grâce à la déformabilité de l'outil de travail 8.

Tel que représenté à la figure 12, le bâti 23 du robot ménager 22 est avantageusement disposé au dessus de l'ouverture 26 du récipient 25. Cette disposition permet de s'affranchir de la présence d'une cheminée issue de la paroi de fond 27 et servant au passage d'un arbre de transmission du mouvement entre le moteur et l'accessoire de préparation culinaire 1. Le récipient 25 est fixe par rapport au bâti 23.

A titre de variantes il est également envisageable que le récipient 25 soit monté entraîné en rotation par rapport au bâti 23 ou que le récipient 25 soit monté libre en rotation par rapport au bâti 23, l'axe de rotation du récipient 25 étant de préférence distinct de l'axe de rotation de l'organe de manoeuvre 2 de l'accessoire 1. Selon cette dernière disposition, l'accessoire de préparation culinaire 1 peut entraîner le récipient de travail contenant une préparation.

Tel que représenté à la figure 12, le bâti 23 du robot ménager 22 obture l'ouverture 26 du récipient 25. Cette disposition permet d'éviter les projections de matière alimentaire 40 hors du récipient 25.

Avantageusement tel que représenté à la figure 12 l'organe de transmission 24 procure à l'accessoire de préparation culinaire 1 un mouvement planétaire. D'autres types de mouvements tels que par exemple un mouvement de rotation continu ou alterné sont également envisageables.

L'accessoire de préparation culinaire 1 est monté de manière à ce qu'au moins une partie de l'outil de travail 8 vienne périodiquement au contact de la paroi 20 lors du mouvement de l'accessoire de préparation culinaire 1 dans le récipient de travail 25 du robot ménager 22 selon l'invention.

Avantageusement la présence d'au moins une nervure 29 sur la paroi 20 du récipient de travail 25 permet de perturber localement la rotation de l'outil de travail 8 et ainsi de favoriser le travail de la préparation. L'outil de travail 8 entre alors périodiquement au contact de la paroi 20 du récipient de travail 25 au niveau de ladite nervure 29.

Selon une autre disposition de l'outil de travail 8 dans le récipient 25, l'outil de travail 8 entre en contact avec une zone annulaire de la paroi 20 du récipient 25.

De manière encore plus préférée l'accessoire de préparation culinaire 1 est monté de manière à ce que la majeure partie de la paroi de fond 27 du récipient de travail 25 soit balayée par l'outil de travail 8.

L'accessoire de préparation culinaire 1 selon l'invention peut être également monté sur un appareil ménager de préparation culinaire 30. Tel que représenté à la figure 13, l'appareil ménager de préparation culinaire 30 comporte un moyen d'entraînement 31 relié à des moyens de transmission 32 connus. L'organe de manoeuvre 2 de l'accessoire de préparation culinaire 1 est monté de manière connue et avantageusement de façon amovible sur les moyens de transmission 32.

Selon une variante de réalisation, non représentée aux figures, plus d'un accessoire 1 est monté sur le batteur 21, le robot 22, ou l'appareil ménager 30, par exemple deux accessoires 1. De préférence chaque accessoire 1 est animé du même type de mouvement, mais d'autres combinaisons sont envisageables.

L'utilisateur voulant se servir du batteur 21, du robot 22, ou de l'appareil ménager 30 munis de l'accessoire de préparation culinaire 1 selon l'invention dépose tout ou partie des différents ingrédients nécessaires à la réalisation de la préparation souhaitée dans le récipient de travail 25, s'il utilise le robot 22, ou dans les autres cas dans tout récipient de travail approprié.

L'utilisateur se servant du batteur 21 muni de l'accessoire de préparation culinaire 1 selon l'invention peut amener l'outil de travail 8 au contact de la paroi 20 du récipient de travail sans craindre de détériorer ledit accessoire de préparation culinaire 1 ou la paroi 20. Il en va de même lors de l'utilisation de l'appareil ménager 30 muni de l'accessoire de préparation culinaire selon l'invention. L'utilisateur n'a pas besoin de se soucier de la position précise de l'accessoire 1 par rapport à la paroi 20 du récipient et peut se concentrer sur la réalisation de la préparation. Il peut aussi accéder plus facilement à l'ensemble de la paroi 20 du récipient recouverte de matière alimentaire et par là même réaliser un mélange plus homogène des ingrédients constituant la matière alimentaire. Chacun des fils 3 formant l'outil de travail 8 est susceptible de venir périodiquement en contact avec la paroi 20 du récipient de travail dans le cadre d'une utilisation normale de l'appareil muni de l'accessoire 1.

Dans le robot 22 muni de l'accessoire de préparation culinaire 1 selon l'invention l'outil de travail 8 entre en contact avec la paroi 20 du récipient de travail 25, de préférence selon une surface annulaire ou encore de manière périodique au niveau de la nervure 29.

Lors de l'entrée en contact d'une partie de l'outil de travail 8 avec la paroi 20, certains fils 3 sont déformés élastiquement. Ces fils tendent à reprendre leur position lorsqu'ils quittent le contact avec la paroi 20. La rotation de l'outil de travail 8 dans la préparation obtenue par le mouvement de l'organe de transmission 24 du robot 22, le mouvement conféré par le batteur 21 ou par l'appareil ménager 30 associés de préférence au mouvement conféré par l'utilisateur, permettent d'obtenir une déformation dynamique dudit outil de travail lorsque celui-ci vient en contact avec la paroi 20. La déformation dynamique de l'outil de travail 8 favorise la création de tourbillons dans la préparation autour des fils 3, phénomène intéressant notamment lors de la réalisation d'émulsions, de mélanges ou de dispersions, car il conduit à un mélange intime de la matière alimentaire et permet d'obtenir une texture fine. La déformation dynamique de l'outil de travail 8 favorise également l'entrée d'air dans la préparation, phénomène intéressant lors de la réalisation de mousses, car il permet d'augmenter le foisonnement de la préparation et d'obtenir une texture fine.

Le contact des fils 3 de l'outil de travail 8 avec la paroi 20 rend possible le travail de toute la matière présente dans le récipient et favorise ainsi l'obtention de préparations bien homogènes. L'accessoire 1 permet également d'obtenir une texture fine favorisant la stabilité des préparations.

Il résulte de tous ces avantages apportées par la présente invention une grande qualité de préparation. Le batteur 21 ou le robot ménager 22 munis de l'accessoire de préparation culinaire 1 selon l'invention permettent notamment de réaliser sans effort des préparations telles que mélanges, dispersions, émulsions ou mousses avec une grande qualité de résultat.

L'outil de travail 8 de l'accessoire de préparation culinaire 1 monté sur le batteur 21, le robot 22 ou l'appareil ménager 30 se déforme élastiquement lorsqu'il entre en contact avec la paroi 20 du récipient de travail et produit une signature de bruit compatible avec la perception par l'utilisateur d'une utilisation normale dudit l'accessoire.

L'accessoire de préparation culinaire 1 selon l'invention est de plus très facile à nettoyer et d'une utilisation sûre et sans danger grâce à la malléabilité de l'outil de travail 8.

### POSSIBILITE D'APPLICATION INDUSTRIELLE

L'invention trouve son application dans le domaine technique général des appareils électroménagers de préparation culinaire, du genre robot ménager multi-usages.

## Revendications

1. Accessoire de préparation culinaire (1) pour appareil ménager ou électroménager de préparation culinaire, destiné à être utilisé dans un récipient de travail, comportant un outil de travail (8) monté sur un organe de manoeuvre (2), l'outil de travail (8) étant constitué d'un ou de plusieurs fils flexibles (3) formant des boucles définissant une cage (19) susceptible de se déformer contre une paroi (20) du récipient de travail pour épouser sensiblement la forme de ladite paroi, **caractérisé en ce que** les boucles sont réunies par un organe de maintien (9) mobile par rapport à l'organe de manoeuvre (2).

2. Accessoire selon la revendication 1 **caractérisé en ce que** l'organe de maintien (9) est disposé à l'opposé de l'organe de manoeuvre (2).

3. Accessoire selon l'une des revendications 1 ou 2 **caractérisé en ce que** l'une au moins des deux extrémités (7) du ou de chaque fil flexible (3) est montée sur l'organe de manoeuvre (2).

4. Accessoire selon l'une des revendications 1 à 3 **caractérisé en ce que** le ou les fil(s) flexible(s) (3) est (sont) monté(s) de manière croisée entre l'organe de manoeuvre (2) et l'organe de maintien (9).

5. Accessoire selon l'une des revendications 1 à 4 **caractérisé en ce que** le ou les fil(s) flexible(s) (3) est (sont) monté(s) de façon périodique autour de l'axe de l'organe de manoeuvre (2).

6. Accessoire selon l'une des revendications 1 à 5 **caractérisé en ce que** le ou les fil(s) flexibles (3) est (sont) réalisé(s) en matériau polymère.

7. Accessoire selon l'une des revendications 1 à 6 **caractérisé en ce que** le fil (3) ou l'un au moins des fils (3) a une section sensiblement circulaire.

8. Accessoire selon l'une des revendications 1 à 7 **caractérisé en ce que** le fil (3) ou l'un au moins des fils (3) est issu de l'organe de manoeuvre (2) ou de l'organe de maintien (9) par moulage.

9. Accessoire selon l'une des revendications 1 à 8 **caractérisé en ce que** le fil (3) ou l'un au moins des fils (3) présente une section cannelée.

10. Accessoire selon l'une des revendications 1 à 9 **caractérisé en ce que** l'outil de travail (8) comporte plusieurs familles de fils (3) de sections différentes.

11. Accessoire selon l'une des revendications 1 à 10 **caractérisé en ce que** l'outil de travail (8) comporte plusieurs familles de fils (3) de raideurs différentes.

12. Appareil électroménager de préparation culinaire, du genre batteur (21) ou robot (22), comportant un moteur disposé dans un bâti (23) et entraînant, par l'intermédiaire d'un organe de transmission (24), l'organe de manoeuvre (2) d'au moins un accessoire de préparation culinaire (1) selon l'une des revendications 1 à 11.

13. Appareil ménager de préparation culinaire (30), comprenant un moyen d'entraînement (31) relié à des moyens de transmission (32) entraînant, par l'organe de manoeuvre (2) d'au moins un accessoire de préparation culinaire (1) selon l'une des revendications 1 à 11.

## Claims

1. A food-preparing accessory (1) for a kitchen utensil or a domestic appliance for preparing food, the accessory being designed to be used in a work receptacle and including a work tool (8) fitted to a drive member (2), the work tool (8) being constituted by one or more flexible wires (3) forming loops defining a cage (19) that is capable of deforming against a wall (20) of the work receptacle so as substantially to match the shape of said wall, said accessory being **characterized in that** the loops are united by a holding member (9) that is mounted to move relative to the drive member (2).

2. An accessory according to claim 1, **characterized in that** the holding member (9) is disposed opposite from the drive member (2).

3. An accessory according to claim 1 or claim 2, **characterized in that** at least one of the two ends (7) of the flexible wire (3) or of each of the flexible wires (3) is fitted to the drive member (2).

4. An accessory according to any one of claims 1 to 3, **characterized in that** the one or more flexible wires (3) are fitted in crossed-over manner between the drive member (2) and the holding member (9).

5. An accessory according to any one of claims 1 to 4, **characterized in that** the one or more flexible wires (3) are fitted periodically about the axis of the drive member (2).

6. An accessory according to any one of claims 1 to 5, **characterized in that** the one or more flexible wires (3) are made of a polymer material.

7. An accessory according to any one of claims 1 to 6, **characterized in that** the wire (3) or at least one of the wires (3) is of substantially circular section.

8. An accessory according to any one of claims 1 to 7, **characterized in that** the wire (3) or at least one of the wires (3) is integrally molded with the drive member (2) or with the holding member (9).

9. An accessory according to any one of claims 1 to 8, **characterized in that** the wire (3) or at least one of the wires (3) is of fluted section.

10. An accessory according to any one of claims 1 to 9, **characterized in that** the work tool (8) includes a plurality of families of wires (3) of different sections.

11. An accessory according to any one of claims 1 to 10, **characterized in that** the work tool (8) includes a plurality of families of wires (3) of different stiffnesses.

12. A food-preparing domestic appliance of the beater type (21) or of the food processor type (22) including a motor disposed in a housing (23) and acting via a transmission member (24) to drive the drive member (2) of at least one food-preparing accessory (1) according to any one of claims 1 to 11.

13. A food-preparing kitchen utensil (30) including drive means (31) connected to transmission means (32) driving the drive member (2) of at least one food-preparing accessory (1) according to any one of claims 1 to 11.

## Patentansprüche

1. Zubehörteil (1) zur Kochzubereitung für ein Haushaltsgerät oder Elektrohaushaltsgerät zur Kochzubereitung, das in einem Arbeitsbehälter verwendet werden soll, mit einem Arbeitswerkzeug (8), das an einer Betätigungseinrichtung (2) montiert ist, wobei das Arbeitswerkzeug (8) aus einem oder mehreren biegsamen Drähten (3) besteht, die Schleifen bilden, die einen Käfig (19) definieren, der sich an einer Wand (20) des Arbeitsbehälters verformen kann, um sich im wesentlichen der Form der Wand anzupassen, **dadurch gekennzeichnet, daß** die Schleifen durch eine Halteeinrichtung (9) verbunden sind, die bezüglich der Betätigungseinrichtung (2) beweglich ist.

2. Zubehörteil nach Anspruch 1, **dadurch gekennzeichnet, daß** die Halteeinrichtung (9) gegenüber der Betätigungseinrichtung (2) angeordnet ist.

3. Zubehörteil nach einem der Ansprüche 1 oder 2, **dadurch gekennzeichnet, daß** mindestens eines der zwei Enden (7) des oder jedes biegsamen Drahts (3) an der Betätigungseinrichtung (2) montiert ist.

4. Zubehörteil nach einem der Ansprüche 1 bis 3, **dadurch gekennzeichnet, daß** der biegsame Draht oder die biegsamen Drähte (3) überkreuz zwischen der Betätigungseinrichtung (2) und der Halteeinrichtung (9) montiert ist oder sind.

5. Zubehörteil nach einem der Ansprüche 1 bis 4, **dadurch gekennzeichnet, daß** der biegsame Draht oder die biegsamen Drähte (3) periodisch um die Achse der Betätigungseinrichtung (2) montiert ist oder sind.

6. Zubehörteil nach einem der Ansprüche 1 bis 5, **dadurch gekennzeichnet, daß** der biegsame Draht oder die biegsamen Drähte (3) aus Polymermaterial besteht oder bestehen.

7. Zubehörteil nach einem der Ansprüche 1 bis 6, **dadurch gekennzeichnet, daß** der Draht (3) oder zumindest einer der Drähte (3) einen im wesentlichen kreisförmigen Abschnitt aufweist.

8. Zubehörteil nach einem der Ansprüche 1 bis 7, **dadurch gekennzeichnet, daß** der Draht (3) oder zumindest einer der Drähte (3) durch Formen aus der Betätigungseinrichtung (2) oder aus der Halteeinrichtung (9) entstanden ist.

9. Zubehörteil nach einem der Ansprüche 1 bis 8, **dadurch gekennzeichnet, daß** der Draht (3) oder zumindest einer der Drähte (3) einen gerippten Abschnitt aufweist.

10. Zubehörteil nach einem der Ansprüche 1 bis 9, **dadurch gekennzeichnet, daß** das Arbeitswerkzeug (8) mehrere Gruppen von Drähten (3) mit unterschiedlichen Abschnitten aufweist.

11. Zubehörteil nach einem der Ansprüche 1 bis 10, **dadurch gekennzeichnet, daß** das Arbeitswerkzeug (8) mehrere Gruppen von Drähten (3) mit unterschiedlichen Steifigkeiten aufweist.

12. Elektrohaushaltsgerät zur Kochzubereitung der Art Handmixer (21) oder Küchenmaschine (22) mit einem Motor, der in einem Gestell (23) angeordnet ist und durch eine Übertragungseinrichtung (24) die Betätigungseinrichtung (2) von mindestens einem Zubehörteil (1) zur Kochzubereitung nach einem der Ansprüche 1 bis 11 antreibt.

13. Haushaltsgerät (30) zur Kochzubereitung mit einem Antriebsmittel (31), das mit Übertragungsmitteln (32) verbunden ist, die durch die Betätigungseinrichtung (2) mindestens ein Zubehörteil (1) zur Kochzubereitung nach einem der Ansprüche 1 bis 11 antreiben.
